(19) Europäisches Patentamt
European Patent Office
Office européen des brevets

(11) EP 0 744 234 B1

(12) EUROPÄISCHE PATENTSCHRIFT

(45) Veröffentlichungstag und Bekanntmachung des Hinweises auf die Patenterteilung:
27.10.1999 Patentblatt 1999/43

(51) Int. Cl.$^6$: B22F 9/00, B22F 9/24, B01J 37/03, B01J 37/00

(21) Anmeldenummer: 96101727.4

(22) Anmeldetag: 07.02.1996

(54) **Verfahren zur Herstellung röntgenamorpher und nanokristalliner Metallpulver**

Process for preparing nanocrystalline and X-rays-amorphous metal powder

Procédé pour la fabrication de poudres métalliques nanocristallines et amorphes aux rayons X

(84) Benannte Vertragsstaaten:
AT BE CH DE ES FR GB IT LI NL SE

(30) Priorität: 26.05.1995 DE 19519360

(43) Veröffentlichungstag der Anmeldung:
27.11.1996 Patentblatt 1996/48

(73) Patentinhaber:
Th. Goldschmidt AG
45127 Essen (DE)

(72) Erfinder:
• Klapdor, Astrid
D-45147 Essen (DE)
• Knott, Wilfried, Dr.
D-45141 Essen (DE)
• Windbiel, Dagmar
D-45289 Essen (DE)

(56) Entgegenhaltungen:
EP-A- 0 423 627          EP-A- 0 469 463
EP-A- 0 490 156          DE-A- 2 011 936
DE-A- 2 012 972          DE-A- 4 308 114

• MATERIALS TRANSACTIONS, JIM, FEB. 1995, JAPAN, Bd. 36, Nr. 2, ISSN 0916-1821, Seiten 150-160, XP000600600 COCCO G ET AL: "Mechanical alloying processes and reactive milling"

**Beschreibung**

Die Erfindung betrifft ein Verfahren zur Herstellung röntgenamorpher und nanokristalliner Metallpulver der Gruppe 4 bis 11 des Periodensystems (IUPAC 1988).

Neuere Methoden zur Darstellung feinster Metallpartikel bestehen in der Metallverdampfung (S.C. Davis und K.J. Klabunde, Chem. Rev. 1982, 82, 153 - 208), elektrolytischen Verfahren (N. Ibl, Chem. Ing.-Techn. 1964, 36, 601 - 609) sowie der Reduktion von Metallhalogeniden mit Alkalimetallen (R.D. Rieke, Organometallics, 1983, 2, 377) oder anthracenaktiviertem Magnesium (DE 35 41 633). Bekannt ist ferner die Reduktion von Metallsalzen mit Alkalimetallborhydriden in wäßriger Phase zu Metallboriden (N.N. Greenwood, A. Earnshaw, Chemistry of the Elements, Pergamon Press 1986, S. 190). Die Koreduktion von Eisen- und Kobaltsalzen in Wasser führt zu einer Fe/Co/B-Legierung der Zusammensetzung $Fe_{44}Co_{19}B_{37}$ (J. v. Wonterghem, St. Morup, C.J.W. Koch, St.W. Charles, St. Wells, Nature, 1986, 322, 622).

Natriumborhydrid ist ebenfalls Reduktionsmittel bei der Erzeugung wärmebeständiger, amorpher ferromagnetischer Pulver entsprechend der Lehre der DE-OS 36 21 624, wobei Salze des Eisens, Kobalts, Nickels und Chroms in Gegenwart von Komplexbildnern in Natronlauge reduziert werden und Xylol als oxidationshemmende Phase zugesetzt wird.

Die DE-OS 40 24 205 lehrt ein Verfahren zur Herstellung von Metall-Magnesium-Verbindungen sowie ihrer Verwendung zur Herstellung feinverteilter gegebenenfalls amorpher Metall- und Legierungspulver bzw. intermetallischer Verbindungen auf einem nichtmetallurgischen, d. h. naßchemischen Wege unter milden Bedingungen, wobei die Metall-Magnesium-Legierungen erhältlich sind durch Umsetzung von Metallhalogeniden der Metalle der Gruppen III A - V A, V B - VII B, VIII B, I B und II B des Periodensystems ($M^1X_m$) oder von Metallen $M^1$ oder $M^1$-Hydriden in einem organischen Lösungsmittel mit Magnesiumhydrid ($MgH_2$), Hydridmagnesiumhalogeniden (HMgX), Organomagnesiumverbindungen und/oder metallischem Magnesium, gegebenenfalls in Gegenwart von Anthracen oder dessen Derivaten, Magnesiumhalogeniden, organischen Halogeniden und/oder Chinuclidin als Aktivatoren. Als $MgH_2$ wird hierbei ein besonders aktives Magnesiumhydrid eingesetzt, das komplexe Katalysatoren enthält ($MgH_2$* gemäß EP-PS 0 003 564 bzw. $MgH_2$' gemäß DE-PS 37 22 993). Durch stöchiometrische Umsetzung der Metall-Magnesium-Verbindungen mit den entsprechenden Metallhalogeniden sind amorphe Metallpulver erhältlich.

Die WO 90/07012 beschäftigt sich mit einem Verfahren zur Herstellung eines Metalls, einer Legierung oder einer Keramik, wobei die zu reduzierende Metallverbindung allein oder in Gegenwart wenigstens eines Reduktionsmittels einer mechanischen Aktivierung unterworfen wird. Bevorzugt wird zur mechanischen Aktivierung eine Hochenergie-Vermahlung eingesetzt, die neben der bei Mahlprozessen üblichen Partikelzerkleinerung zu einem Verschweißen der Pulverteilchen führt. Eingedenk des extremen Energieverbrauchs, des damit einhergehenden Materialverschleißes und der meist sehr langen Reaktionszeiten (überwiegend länger als 24 Stunden) stellt dieses Verfahren keine wirtschafliche Lösung zur Erzeugung feiner Pulvermetalle bereit.

Die EP-A-0 423 627 lehrt ein Verfahren zur Herstellung feinverteilter, mikrokristalliner bis amorpher Metall- bzw. Legierungspulver und von in organischen Solventien kolloidal gelösten Metallen bzw. Legierungen, bei dem Metallsalze einzeln oder als Mischung in inerten organischen Solventien mit Alkali- oder Erdalkalihydriden, die mittels bor- bzw. galliumorganischer Komplexbildner im organischen Medium in Lösung gehalten bzw. mit Tetraalkylammoniumtriorganohydridoborat umgesetzt werden. Das beanspruchte Verfahren ist aufgrund der Verwendung aufwendiger Bor- bzw. Galliumkomplexe teuer und liefert darüber hinaus häufig Metallpulver mit nicht zu vernachlässigenden Borgehalten.

Der vorliegenden Erfindung liegt die technische Problemstellung zugrunde, ein Verfahren zur Herstellung der technisch bedeutsamen röntgenamorphen bzw. nanokristallinen Metallpulver auf Basis einfacher, kommerziell verfügbarer Metallhydride zu erschließen, das sowohl auf die im Stand der Technik erwähnten, komplexen Aktivatoren und Komplexbildner als auch auf teure Aktivierungstechniken verzichtet und dennoch zu den gewünschten Produkten führt.

Ultrafeine Metallpulver mit einer Partikelgröße im Nanometer-Bereich erschließen einen Zugang zu extrem dünnen Metallschichten und zu metallischen Pasten im Bereich der Mikroelektronik, des weiteren sind sie für die Herstellung von Magnetträgern interessant, da bei nanokristallinen Metallen jeder individuelle Kristallit seine eigene magnetische Orientierung besitzt. Als Sinterhilfsmittel sind nanokristalline Metalle einzusetzen und dienen auch als Basismaterial zur Herstellung von Kondensatoren und Sensoren. Als weitere bedeutende Anwendung feinstteiliger Metalle sind die von amorphen Metallen abgeleiteten Pseudolegierungen zu nennen, die eine Herstellung schmelzmetallurgisch unzugänglicher Systeme gestatten. Diese auch als metallische Gläser bezeichneten Festkörper sind charakterisiert durch hohe Härte bei gleichzeitig guter Verformbarkeit und einem bestechenden weichmagnetischen Verhalten. Auf dem Gebiet der heterogenen Katalyse bietet sich für nanokristalline Metalle ein weites Anwendungsfeld, insbesondere dann, wenn die Metalle auf geeigneten Trägermaterialien fixiert sind.

Das gestellte Problem wird gelöst durch ein Verfahren zur Herstellung amorpher und nanokristalliner Metallpulver der Gruppe 4 bis 11 des Periodensystems, indem man Halogenide dieser Metalle in einem organischen Lösungsmittel mit Alkali- oder Erdalkalihydriden unter ständiger Aufmahlung umsetzt.

Alkali- bzw. Erdalkalihydride wie z.B. Lithiumhydrid, Natriumhydrid, Kaliumhydrid und Calciumhydrid sind technisch verfügbar und vom wirtschaftlichen Standpunkt für die Herstellung feinteiliger Metallpulver interessant. Nimmt man als Auswahlmerkmal die Handhabungssicherheit mit in die Betrachtung, so beansprucht seit einiger Zeit Magnesiumhydrid besondere Aufmerksamkeit.

Vorzugsweise wird als Hydrid ein Magnesiumhydrid eingesetzt, welches hergestellt wird, indem man dem zu hydrierenden Magnesium bei der Ersthydrierung als Katalysator Magnesiumhydrid zusetzt und die Hydrierung unter ständigem Rühren des Reaktionsgutes durchführt.

Besonders geeignet ist ein Magnesiumhydrid, das bei hohen Temperaturen autokatalytisch aus den Elementen gewonnen wird, indem man dem zu hydrierenden feinteiligen Magnesium bei der Ersthydrierung als Katalysator Magnesiumhydrid einer Teilchengröße von $\leq 400$ µm in einer Menge von mindestens 1,2 Gew.-%, bezogen auf zu hydrierendes Magnesium, zusetzt und die Hydrierung bei einer Temperatur von $\geq 250$ °C und einem Druck von 0,5 bis 5 MPa unter ständigem Rühren des Reaktionsgutes durchführt (EP-B-0 490 156).

Weiterhin besonders geeignet ist ein Magnesiumhydrid, welches hergestellt wird, indem man dem zu hydrierenden Magnesium bei der Ersthydrierung als Katalysator feinverteiltes, hochreaktives Magnesium Zusetzt und die Hydrierung unter ständigem Rühren des Reaktionsgutes durchführt, wobei die Hydrierung vorzugsweise bei einer Temperatur von $\geq 250$ °C und einem Druck von 0,5 bis 5 MPa unter ständigem Rühren des Reaktionsgutes durchführt (EP-A-0 685 425).

Diese Magnesiumhydride zeichnen sich durch ein Höchstmaß an Handhabungssicherheit aus, da sie nichtpyrophor sind und selbst bei Kontakt mit Mineralsäuren nicht zur Entzündung neigen (G. Koerner, K.-D. Klein und W. Knott, Z. Naturforsch. 47b, 767 (1992)).

Die Aufmahlung bzw. tribochemische Aktivierung des bei hohen Temperaturen aus den Elementen mittels Autokatalyse hergestellten Magnesiumhydrids übt, für den Fachmann erstaunlich, mehrere wichtige Funktionen in der Reduktionsreaktion aus. Dieses relativ inerte Magnesiumhydrid gewinnt in situ eine Reduktionskraft, die sonst nur denjenigen bekannten Formen von $MgH_2$ zukommt, deren Synthese in organischen Lösungsmitteln bei deutlich tieferen Temperaturen unter Verwendung komplexer Katalysatoren erfolgt.

Die technische Umsetzung des erfindungsgemäßen Verfahrens wird nicht zuletzt durch sichere Handhabbarkeit des nichtpyrophoren autokatalytisch erzeugten Magnesiumhydrids gewährleistet.

Ein weiterer, verfahrenstypischer Effekt geht von der eingebrachten Mahlenergie aus, die eine große Dispersivität des reduzierten Metalles erzeugt, wobei diese ohne den stabilisierenden Einfluß von Komplexbildnern erzielt wird.

Die Herstellung der erfindungsgemäßen nanokristallinen bzw. röntgenamorphen Metalle erfolgt in einfacher Weise durch stöchiometrische Umsetzung der Alkali- ($M^I H$) bzw. Erdalkalihydride ($M^{II} H_2$) mit den entsprechenden Metallhalogeniden gemäß den Gleichungen

$$\ddot{U}MX_n \quad + \quad n\ M^I H \quad \rightarrow \quad \ddot{U}M^0 \quad + \quad n\ M^I X \quad + \quad n/2\ H_2$$

$$\ddot{U}MX_n \quad + \quad n/2\ M^{II} H_2 \quad \rightarrow \quad \ddot{U}M^0 \quad + \quad n/2\ M^{II} X_2 \quad + \quad n/2\ H_2$$

wobei $\ddot{U}MX_n$ ein Übergangsmetallhalogenid der Gruppen 11, 4 und 8 bis 10 des Periodensystems der Elemente darstellt.

Die Abtrennung und Aufarbeitung der nach dem erfindungsgemäßen Verfahren hergestellten amorphen bzw. nanokristallinen Pulver ist im Falle der ferromagnetischen Metalle besonders elegant und einfach, da man diese z. B. an magnetischen Tauchfingern abscheiden und von anhaftenden Salzen freiwaschen kann. Die Reinigung der nichtmagnetischen Metallpulver, wie z. B. Titan, ist in vorteilhafter Weise durch Extraktion der in zahlreichen Solventien gut löslichen Magnesiumhalogenide möglich. Andere nach dem beanspruchten Verfahren gewonnene Metalle wie z.B. Tantal lassen sich durch die Kombination von Laugungs- und Waschschritten in entsprechend reiner Form isolieren. Durch Variation der eingesetzten Metallhalogenide erschließt das hier vorgestellte Verfahren einen eleganten Zugang zu nanokristallinen intermetallischen Phasen.

Als Solventien eignen sich übliche Ether zur Reduktion derjenigen Metallhalogenide, deren Lewisacidität nicht zu unerwünschten Nebenreaktionen mit dem Ether führt. Extrem lewissaure Halogenide, wie z. B. Tantal(V)chlorid oder Wolfram(VI)chlorid, eignen sich daher nicht zur Umsetzung in Ethern, können aber beispielsweise in Alkanen, Aromaten oder Alkylaromaten, wie Toluol, zu den feinteiligen Metallen reduziert werden. Bei Auswahl eines etherischen Solvens wird Tetrahydrofuran bevorzugt eingesetzt.

Aus dem Dargelegten ergibt sich, daß nur solche Lösungsmittel in Frage kommen, die gegenüber den Reaktanden inert sind, daß heißt, daß durch die Einwirkung der eingesetzten Hydride bzw. Metallhalogenide keine Reduktions-, Spaltungs- oder Polymerisationsreaktionen stattfinden sollten.

## Beispiel 1

In einer 500-ml-Laborkugelmühle werden 19,1 g (0,118 Mol) wasserfreies Eisen(III)chlorid $FeCl_3$ mit 5,1 g (0,177 Mol) Magnesiumhydrid (autokatalytisch hergestelltes $MgH_2$, Hydridgehalt 92 %) unter Aufmahlung vorgelegt, und dann werden 250 ml absolutiertes Tetrahydrofuran hinzugehebert. Die Zugabe des Ethers führt zu einer spontanen Wasserstoffentwicklung. Eine nachgeschaltete Gasbürette erlaubt die volumetrische $H_2$-Bestimmung während der Reduktion des Halogenids zum Metall und gibt somit Auskunft über den erzielten Umsatz. Bereits nach 5 Minuten der Aufmahlung hat die Reaktionsmischung unter deutlicher Exothermie (Temperaturanstieg auf 50 °C) einen Umsatz von 31 % erreicht. Der erzielte Reaktionsfortschritt wird nicht zuletzt durch die einhergehende Farbveränderung (gelbgrün nach grün) sichtbar.

Nach Abklingen der exothermen Anfangsphase wird die Reaktionsmischung unter weiterer ständiger Aufmahlung auf Rückflußtemperatur erhitzt, wobei nach etwa einer Stunde das zu erwartende Wasserstoffvolumen freigesetzt und die Reaktion beendet ist.

Man läßt den Ansatz unter Argonbegasung abkühlen und überführt die Reaktionsmischung in einen Vorlagekolben, wobei man zur Vermeidung von Verlusten die Kugelmühle mit kleinen Portionen frischen Tetrahydrofurans nachspült. Der Vorlagekolben wird mit einem magnetischen Tauchfinger versehen, an dessen Oberfläche sich metallisches Eisen abscheidet. Nach Abtrennung des salzbefrachteten Lösungsmittels und fortgesetzter Waschung mit kleinen Mengen frischen THF's gewinnt man ein zunächst noch etherfeuchtes Eisenpulver.

Komplexometrische Analyse der vereinigten THF-Phasen erlaubt eine Bilanzierung der Reaktion im Hinblick auf den Restgehalt von Salzen im Rohprodukt. Fortgesetzte Extraktion mit THF in einer Soxhlet-Apparatur gestattet die Isolierung reinen Eisens, das im Ölpumpenvakuum getrocknet wird. Ausbeute: 5,1 g (77 % der Theorie).

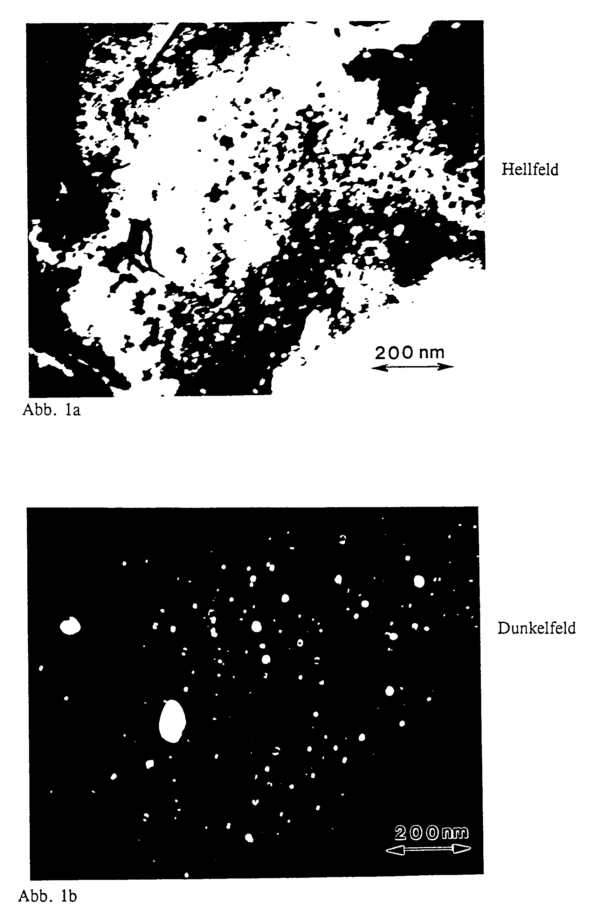

TEM-Untersuchungen (Transmissions-Elektronenmikroskopie, Hell- und Dunkelfeldaufnahmen in den Abbildungen 1a und 1b) des erhaltenen pyrophoren Eisenpulvers belegen mittlere Kristallitgrößen von 28 ± 5 nm.

## Beispiel 2

Analog Beispiel 1 werden in einer 500-ml-Laborkugelmühle 5,8 g (0,2 Mol) autokatalytisch hergestelltes Magnesiumhydrid (Hydridgehalt 91 %) mit 25,9 g (0,2 Mol) wasserfreien Nickelchlorids $NiCl_2$ vermahlen und dann mit gekühltem, absolutiertem Tetrahydrofuran versetzt. Der Ansatz wird unter weiterer ständiger Aufmahlung auf Rückflußtemperatur erhitzt, wobei bereits ca. 30 % Umsatz gasvolumetrisch erfaßt werden. Die weitere Reaktion beansprucht 6,5 Stunden und erreicht einen Umsetzungsgrad von 85 %. Nach beendeter Reaktion wird Nickel analog Beispiel 1 an einem Magnettauchfinger abgeschieden und dann durch fortgesetztes Waschen mit zuvor entgastem, Argon-gesättigtem Wasser von anhaftenden Salzen befreit. Nachwaschen mit absolutiertem Tetrahydrofuran und anschließende Trocknung im Ölpumpenvakuum ergibt 8,0 g pyrophoren Nickelpulvers.

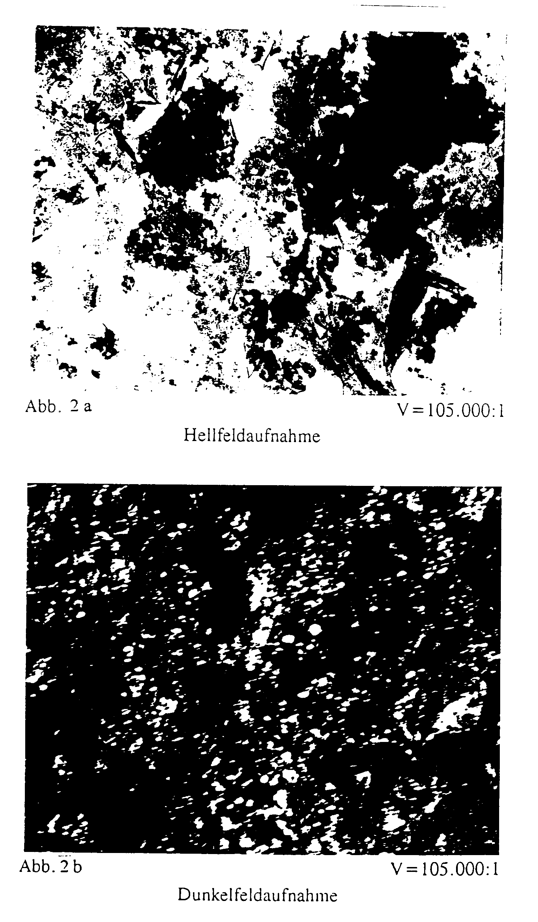

Die zugehörigen TEM-Hell- und -Dunkelfeldaufnahmen sind in den Abbildungen 2a und 2b dargestellt. Die Teilchengrößehbestimmung mittels Röntgenbeugung (Linienverbreiterung der charakteristischen Reflexe) ergibt für das Ni-Pulver eine mittlere Kristallitgröße von 9 ± 0,5 nm. Eine mit den TEM-Untersuchungen gekoppelte EDX-Analyse (energiedisperse Röntgenspektroskopie) zeigt, daß neben Nickel noch Spuren von MgO enthalten sind.

## Beispiel 3

Analog Beispiel 1 werden 25,96 g (0,2 Mol) wasserfreies Kobalt(II)chlorid und 5,98 g (0,2 Mol) autokatalytisch hergestelltes Magnesiumhydrid (91 % Hydridgehalt) in einer Laborkugelmühle vermahlen und mit 250 ml absolutiertem Tetrahydrofuran versetzt. Der Reaktionsansatz wird unter weiterer ständiger Aufmahlung für 6 Stunden auf Rückflußtemperatur erhitzt, wobei die Menge Wasserstoff freigesetzt wird, die einer nahezu vollständigen Umsetzung entspricht.

Nach Abkühlen des Reaktionsansatzes wird analog Beispiel 2 Kobalt magnetisch abgetrennt und durch sukzessives Waschen von anhaftenden Salzen befreit.

Auswaage: 11,1 g (94 % der Theorie) eines stark pyrophoren, röntgenamorphen Kobaltpulvers.

## Beispiel 4

In einer 500-ml-Laborkugelmühle werden 7,8 g (0,271 Mol) 91 %iges, autokatalytisch hergestelltes Magnesiumhydrid unter Aufmahlung vorgelegt und mit gekühltem Tetrahydrofuran (-70 °C) versetzt. 25,7 g (0,135 Mol) Titan(IV)chlorid $TiCl_4$ werden langsam hinzugegeben. Nach beendeter Zugabe wird unter weiterer ständiger Aufmahlung auf Rückflußtemperatur erhitzt. Neben der zu verzeichnenden Wasserstoffentwicklung ist die Reaktion visuell gut zu verfolgen, da sich die Reduktionsstufen des Titans durch ihr Farbenspiel zu erkennen geben.

Nach einer Stunde ist die Reaktion beendet, und der Ansatz wird unter Argonbegasung abgekühlt. Die Reaktionsmischung wird auf eine P-5-Glasfritte gehebert, und die Kugelmühle wird mit kleinen Portionen THF mehrfach nachgespült. Die Hauptmenge Magnesiumchlorid läßt sich durch Extraktion mit THF (z. B. in einem Soxhlet-Extraktor) sehr einfach entfernen.

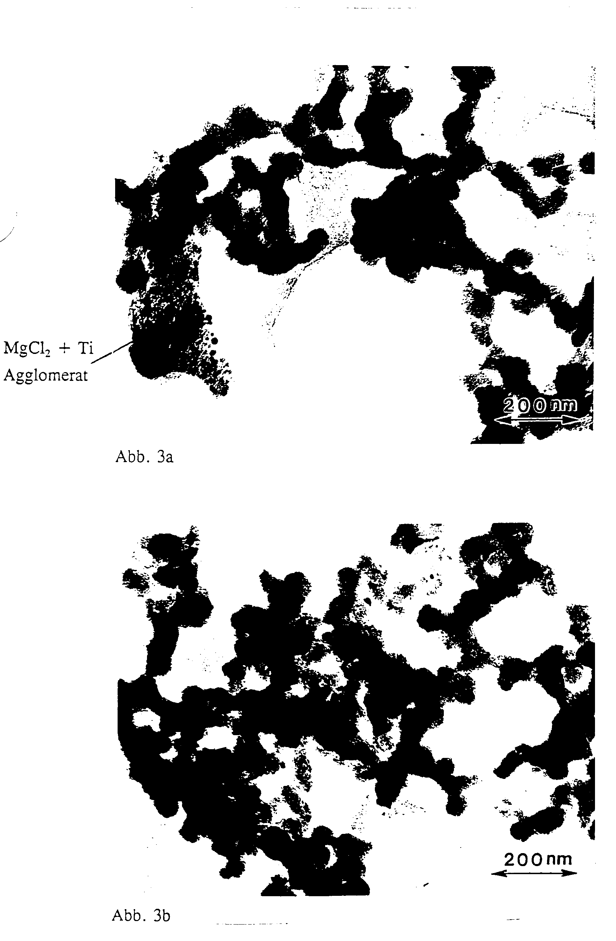

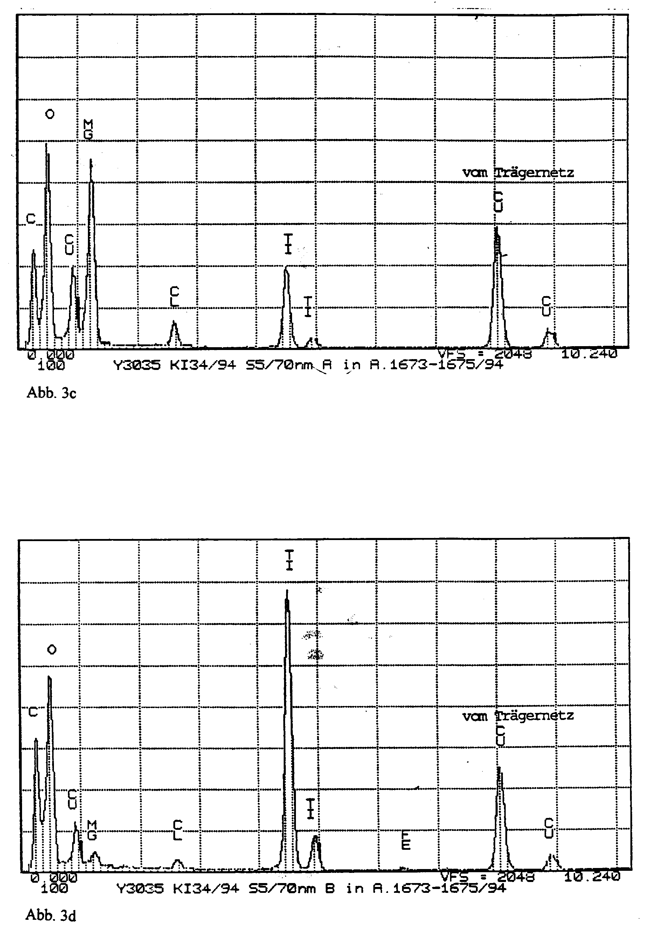

TEM- und EDX-Aufnahmen (Energiedispersive Röntgehbeugung)des noch halogenidhaltigen Titanpulvers sind in den Abbildungen 3a bis 3d dargestellt. Die mittlere Teilchengröße liegt zwischen 50 und 60 nm.

Sofern es gewünscht ist, liefert weiteres Extrahieren ein halogenidfreies, hochpyrophores Titan.

## Beispiel 5

17,7 g (0,18 Mol) wasserfreies Kupfer(I)chlorid CuCl werden mit 2,47 g (0,09 Mol) autokatalytisch hergestelltem, 96 %igem Magnesiumhydrid unter Aufmahlung in einer Laborkugelmühle vorgelegt und mit 250 ml absolutiertem Tetrahydrofuran versetzt. Zweistündiges Erhitzen unter Rückfluß bei ständiger Aufmahlung führt zu einem Umsatz von 85 %.

Unter Argonbeaufschlagung läßt man den Reaktionsansatz erkalten. Abweichend von den zuvor beschriebenen Aufarbeitungstechniken läßt man das metallische Kupfer in der Kugelmühle sedimentieren, dekantiert den flüssigen Überstand nebst Kugelbett und wäscht das Rohprodukt im Reaktionsbehälter salzfrei. Man isoliert nach Trocknung 9,5 g (84 % der Theorie) eines pyrophoren, röntgenamorphen Cu-Pulvers.

## Beispiel 6

In einer 500-ml-Laborkugelmühle werden 16,9 g (0,047 Mol) eines 99,9 %igen Tantal(V)chlorids mit 3,4 g (0,118 Mol) eines 91,8 %igen autokatalytisch hergestellten Magnesiumhydrids unter Aufmahlung vorgelegt und mit 350 ml Toluol versetzt. Nach beendeter Zugabe wird unter weiterer ständiger Aufmahlung zügig auf Rückflußtemperatur erhitzt. Mit der zu verzeichnenden Wasserstoffentwicklung einhergehend ist das begleitende Farbenspiel für den Reaktionsfortschritt signifikant.

Nach 8,5 Stunden ist die Reaktion beendet, und der Ansatz wird unter Argonbegasung abgekühlt. Die Reaktionsmischung wird auf eine P-5-Glasfritte gehebert und die Kugelmühle zur Vermeidung von Verlusten mit kleinen Portionen Toluol nachgespült. Der Filterkuchen wird zunächst mit Ethanol behandelt, dann wird erneut filtriert und der isolierte Feststoff mehrere Stunden mit konz. Salzsäure gekocht. Filtrieren und nachfolgendes Waschen mit Wasser und Ethanol mit anschließender Trocknung liefern ein dunkelgraues, röntgenamorphes Tantalpulver.

## Beispiel 7

Analog Beispiel 6 wird eine Reaktionsmischung bestehend aus 16,6 g (0,042 Mol) 99,9 %igen Wolfram(VI)chlorids und 3,7 g (0,126 Mol) 90,5 %igen autokatalytisch hergestellten Magnesiumhydrids in 450 ml Toluol unter ständiger Aufmahlung bei Rückflußtemperatur umgesetzt. Nach 8,5 Stunden ist die Reaktion beendet und der Ansatz wird unter Argonbegasung abgekühlt und danach auf eine P-5-Glasfritte gehebert. Laugung und Waschung entsprechen den in Beispiel 6 beschriebenen Schritten.

Nach Trocknung im Ölpumpenvakuum gewinnt man ein schwarzes, röntgenamorphes Wolframpulver.

## Beispiel 8

2,3 g (0,29 Mol) Lithiumhydrid werden mit 15,6 g (0,096 Mol) wasserfreiem Eisen(III)chlorid unter Aufmahlung in einer Laborkugelmühle vorgelegt und langsam mit gekühltem Tetrahydrofuran versetzt, wobei bereits eine starke Gasentwicklung zu verzeichnen ist. Nachdem der Reaktionsansatz sich auf Raumtemperatur erwärmt hat, läßt man für ca. 20 Minuten unter weiterer Aufmahlung reagieren, um danach zügig auf Rückflußtemperatur zu erhitzen. Die einhergehende Wasserstoffentwicklung gewährt eine Kontrolle des Reaktionsfortschritts. Nach drei Stunden ist die Reaktion beendet, und der Ansatz wird unter Argonbegasung abgekühlt. Der Ansatz wird komplett in einen inertisierten Zweihalskolben überführt, das metallische Eisen mit Hilfe eines magnetischen Tauchfingers abgetrennt und der Rest verworfen. Mehrfache Waschung des Rohproduktes mit THF und anschließende Trocknung im Ölpumpenvakuum ergibt ein nanokristallines Eisenpulver. Ausbeute: 5,1 g (95 % d. Theorie).

## Beispiel 9

In einer 500-ml-Laborkugelmühle werden 1,9 g (0,242 Mol) Lithiumhydrid mit 16,0 g (0,04 Mol) Wolfram(VI)chlorid in 400 ml Toluol unter ständiger Vermahlung auf Rückflußtemperatur erhitzt. Nach 9 Stunden ist die Reaktion beendet, der Ansatz wird unter Argonbegasung abgekühlt und über eine P-5-Fritte filtriert. Mehrfache Waschung des Filterkuchens mit kleinen Portionen Toluol, Ethanol und argoniertem Wasser befreit das Rohprodukt von anhaftenden Fremdstoffen. Abschließend wird das Metall mit Ether nachgewaschen und im Ölpumpenvakuum getrocknet. Man isoliert 6,9 g (94 % d. Theorie) eines schwarzen röntgenamorphen Wolframpulvers.

**Patentansprüche**

1. Verfahren zur Herstellung amorpher bzw. nanokristalliner Metallpulver der Gruppe 4 bis 11 des Periodensystems, dadurch gekennzeichnet, daß man Halogenide dieser Metalle in einem organischen Lösungsmittel mit Alkali- oder Erdalkalihydriden unter ständiger Aufmahlung umsetzt.

2. Verfahren nach Anspruch 1, dadurch gekennzeichnet, daß als Hydrid ein Magnesiumhydrid eingesetzt wird, welches hergestellt wird, indem man dem zu hydrierenden Magnesium bei der Ersthydrierung als Katalysator Magnesiumhydrid zusetzt.

3. Verfahren nach Anspruch 1, dadurch gekennzeichnet, daß als Hydrid ein Magnesiumhydrid eingesetzt wird, welches hergestellt wird, indem man dem zu hydrierenden Magnesium bei der Ersthydrierung als Katalysator feinverteiltes, hochreaktives Magnesium zusetzt.

4. Verfahren nach den Ansprüchen 1 bis 3, dadurch gekennzeichnet, daß man Halogenide der Metalle der Gruppe 11, 4 und 8 bis 10 des Periodensystems einsetzt.

**Claims**

1. Process for preparing amorphous or nanocrystalline metal powders of groups 4 to 11 of the Periodic Table, characterized in that halides of these metals are reacted with alkali metal hydrides or alkaline earth metal hydrides in an organic solvent with continual milling.

2. Process according to Claim 1, characterized in that the hydride used is a magnesium hydride which is prepared by adding, in the first hydrogenation, magnesium hydride as catalyst to the magnesium to be hydrogenated.

3. Process according to Claim 1, characterized in that the hydride used is a magnesium hydride which is prepared by adding, in the first hydrogenation, finely divided, highly reactive magnesium as catalyst to the magnesium to be hydrogenated.

4. Process according to Claims 1 to 3, characterized in that halides of the metals of groups 11, 4 and 8 to 10 of the Periodic Table are used.

**Revendications**

1. Procédé de préparation de poudres métalliques amorphes ou selon le cas nanocristallines du groupe 4 à 11 du système périodique, caractérisé en ce qu'on transforme sous broyage constant des halogénures de ces métaux en un solvant organique avec des hydrures alcalins ou alcalino-terreux.

2. Procédé suivant la revendication 1, caractérisé en ce qu'on utilise comme hydrure, un hydrure de magnésium, lequel est préparé en ajoutant au magnésium à hydrogéner de l'hydrure de magnésium comme catalyseur lors de l'hydrogénation primaire.

3. Procédé suivant la revendication 1, caractérisé en ce qu'on utilise comme hydrure un hydrure de magnésium, lequel est préparé en ajoutant au magnésium à hydrogéner du magnésium finement divisé, hautement réactif comme catalyseur lors de l'hydrogénation primaire.

4. Procédé suivant les revendications 1 à 3, caractérisé en ce qu'on utilise des halogénures des métaux du groupe 11, 4 et 8 à 10 du système périodique.

Hellfeld

200 nm

Abb. 1a

Dunkelfeld

200nm

Abb. 1b

Abb. 2 a                                    V = 105.000:1

Hellfeldaufnahme

Abb. 2 b                                    V = 105.000:1

Dunkelfeldaufnahme

MgCl$_2$ + Ti
Agglomerat

Abb. 3a

Abb. 3b

Abb. 3c

Abb. 3d